# EUROPEAN PATENT APPLICATION

(11) **EP 3 040 915 A1**
(43) Date of publication of application: **06.07.2016**
(21) Application number: 14200365.6
(22) Date of filing: 29.12.2014
(51) Int. Cl.: G06Q 10/00

(54) **Method and apparatus for identifying trends**

(71) Applicant: Nokia Technologies OY, 02610 Espoo (FI)
(72) Inventor: Tanenbaum, Joshua, Irvine, CA California 92617 (US); Nguyen, David, Santa Clara, CA California 95051 (US)
(74) Representative: Nokia Corporation

(57) **Abstract**

Performing identification of trends by obtaining recorded conversational audio data; obtaining contextual information associated with the recorded conversational audio data; processing the recorded conversational audio data and the obtained contextual information to identify trends in context; and outputting said identified trends in context.

## Description

### TECHNICAL FIELD

The present application generally relates to identifying trends and in particular, but not exclusively, to tracking trending topics.

### BACKGROUND

This section illustrates useful background information without admission of any technique described herein representative of the state of the art.

It is common for social networking sites and other online platforms to perform content analysis to identify topics of interest, emergent themes, and important news. This analysis or tracking of "trending topics" allows service providers to identify important trends and concerns among their user population, and can be leveraged into improved services, and increased revenue. The analysis is mainly based on keyword analysis of written communication and textual input used on these sites.

### SUMMARY

Various aspects of examples of the invention are set out in the claims.

According to a first example aspect of the present invention, there is provided a method, comprising performing identification of trends by
obtaining recorded conversational audio data;
obtaining contextual information associated with the recorded conversational audio data;
processing the recorded conversational audio data and the obtained contextual information to identify trends in context; and
outputting said identified trends in context.

In an embodiment, the method provides improved identification of trends compared to previous mechanisms. In an embodiment, the method is an automated method that cannot be executed by pen and paper.

In an embodiment, the processing comprises identifying at least one reoccurring term in the recorded conversational audio data, the reoccurring term constituting an identified trend.

In an embodiment, the processing comprises converting the recorded conversational audio data to text.

In an embodiment, the recorded conversational audio data comprises speech of a recording user who has performed the recording of the conversational audio data; and the processing comprises performing the identification of trends based on the speech of the recording user, and dispensing with other data comprised in the obtained recorded conversational audio data. This refers for example to a situation where a user records a conversation between herself and one or more other people, but the identification of trends is nevertheless made solely on the basis of the words spoken by the user and the words spoken by other people are dispensed with, i.e. not taken into account. The other data that is dispensed with may comprise also background noise, such as background music. The separation between words spoken by different people may be made for example on the basis of differences in voice frequencies or by suppressing background noise.

In an embodiment, the contextual information comprises at least one of: location, date, time, identity of associated people, physiological measures relating to associated people, information about background noise.

In an embodiment, the method comprises outputting the identified trends in context to one or more participants of the conversational audio data.

In an embodiment, the method comprises outputting said identified trends in context to an environmental display.

In an embodiment, outputting the identified trends in context comprises outputting identified trends tied to certain physical location. The analysis results may for example state that at this location, these topics are popular, while some other location has some other popular topics.

In an embodiment, outputting the identified trends in context comprises outputting identified trends tied to certain physiological condition. The analysis results may for example state that people are excited about these topics or that these are the topics that seem not to raise substantial emotional feelings.

In an embodiment, the method comprises obtaining recorded conversational audio data and associated contextual information from multiple user devices, and processing the obtained recorded conversational audio data and associated contextual information together to identify the trends in context.

According to a second example aspect of the present invention, there is provided an apparatus comprising
an interface configured to receive input; and
a processor configured,
   to obtain recorded conversational audio data;
   to obtain contextual information associated with the recorded conversational audio data;
   to process the recorded conversational audio data and the obtained contextual information to identify trends in context; and
   to output said identified trends in context.

In an embodiment, the interface comprises a microphone configured to record the conversational audio data.

In an embodiment, the interface is a communication interface and the processor is configured to receive recorded conversational audio data and the contextual information through the communication interface.

According to a third example aspect of the present invention there is provided a computer program product comprising computer code for causing performing the method of the first example aspect, when executed by an apparatus. Additionally, in further examples, the computer program product comprises computer code for causing performing the method of one or more example embodiments of the invention, when executed by an apparatus.

The computer program may be stored in a computer readable memory medium.

According to a fourth example aspect of the invention there is provided a non-transitory memory medium comprising the computer program of the third example aspect of the invention.

Any foregoing memory medium may comprise a digital data storage such as a data disc or diskette, optical storage, magnetic storage, holographic storage, opto-magnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device.

According to a fifth example aspect of the present invention, there is provided an apparatus comprising a memory and a processor that are configured to cause the apparatus to perform the method of the first example aspect.

According to a fifth example aspect of the present invention, there is provided an apparatus comprising means for performing the method of the first example aspect.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows an overview of a system of an example embodiment of the invention;
Fig. 2 shows a block diagram of an apparatus according to an example embodiment of the invention;
Fig. 3 shows a block diagram of an apparatus according to an example embodiment of the invention; and
Fig. 4 shows a flow diagram illustrating a method according to an example embodiment of the invention.

### DETAILED DESCRIPTION OF THE DRAWINGS

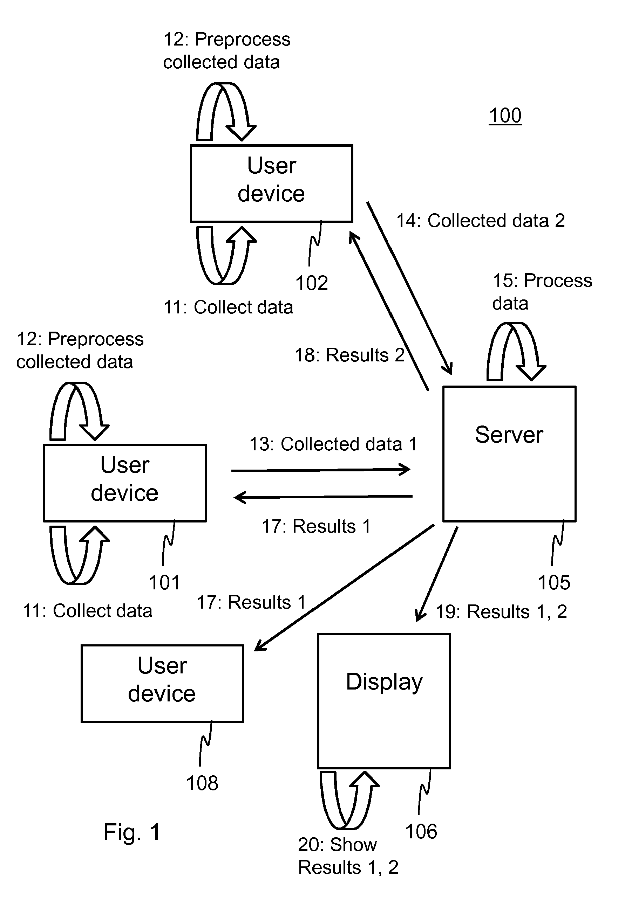

An example embodiment of the present invention and its potential advantages are understood by referring to Figs. 1 through 4 of the drawings. In this document, like reference signs denote like parts or steps.

Keyword analysis for identifying trends in inputs given by users is easily applicable to written communications/written input. In the physical world, however, the dominant medium of communication is the spoken word, which is ephemeral and more difficult to analyze. Identifying trends and applying "trending topics" analysis to conversational data in the physical world provides exciting possibilities for social interactions, but requires further technical considerations compared to keyword analysis of written content.

In an embodiment of the invention continuous audio recording is used for social interactions to enable analysis of conversational data.

In an embodiment trending topics or keywords are collected from audio content (e.g. voice conversations between people) and associated contextual metadata is obtained. The identified topics/keywords are connected with the contextual metadata. Contextual metadata or contextual information may refer to one or more of the following: location, who's around, time, date, social interactions or social location such as coffee shop or restaurant, physiological condition of the conversation participants, and/or information about background noise. Information about the background noise may refer to noise level in certain area, to type of background noise and/or to results of further analysis of ambient noise/sounds. Type of background noise may be for example "people are talking", "engine noise", or "Jingle Bells is playing in the background".

In an embodiment, automatic speech-to-text transcription tools are used in combination with continuous speech recording. The speech recording (or continuous audio recording in more general terms) can be performed by a user device, such as a wearable, handheld and/or portable device. The device may be a smartphone, a tablet, a digital audio recorder, or other life-logging device. The device may be part of a connected device infrastructure that can track location, time, identity of conversational participants or other contextual information in the physical world. In an example embodiment the data generated by the audio recording device is augmented with a layer of context. The contextual data may be learned from a wearable device that is in turn connected to an infrastructure of networked devices.

By identifying reoccurring or popular keywords, and triangulating that data with location and participant data (or other contextual data), a system of an example embodiment is able to generate reports on trending subjects and conversations at various scales from the individual to the local, to the regional, and beyond. Such system may allow users to see their own participation within larger conversations, while also allowing for organizations to build better pictures of issues of importance and interest within a community.

Inclusion of location data within the system facilitates the visualization of how ideas spread through groups of people. This type of data may have significant value to both individual consumers, and to marketing organizations, political campaigns, and civic organizations.

In an embodiment of the invention metadata or contextual data is collected by the user device that performs the audio recording. The user device collects e.g. GPS data, time and date information, scans of nearby devices (e.g. through Bluetooth or Wifi connections) and/or results of physiological measurements, such as heart rate of the user of the user device. Physiological measurement results may be collected from external devices such as heart rate monitors or the user device may be configured to collect the data itself.

In an embodiment the contextual information is initially processed in the user device. Additional processing may be performed in a server for example to extract text from the audio data (speech-to-text conversion), to extract location from the GPS coordinates (name of store, type of store, etc), correlate location data to see who's around, analyze physiological data and so on.

In an embodiment the process outputs identified trends in associated context, e.g. keywords or trending phrases that emerge in certain physical location or during certain time period or associated with certain contextual conditions. In this way the output contains more information than simple identification of trending topics in online textual content. Online textual content is typically tied to certain virtual location (certain web site) whereas embodiments of the invention enable tracking trends in physical dimensions (physical location, time, date, physiological condition of people etc.).

In an embodiment a user device according to the invention is configured to show a visual sign when conversational data is recorded (e.g. red recording light). In this way, people who do not want their speech to be recorded (people who want to opt-out from using the system), may choose not to speak at all during recordation or choose not to speak to the person with the device. Alternatively, as people are aware of the recording, people can ask the user to stop recording. In this way people are allowed to maintain their privacy as they wish.

In an embodiment, the system is configured to share the analysis results of recorded conversations to all participants of the conversation. E.g. identity of all users is obtained and after finishing the analysis a message comprising the analysis results is sent to the participants or information about availability of the analysis results is otherwise shared to conversation participants. The message can be a text message or an email or some other message. The message may include the analysis results or a pointer to a location (e.g. web site) where the results are available. The user of the audio recording device may input the identity of the participants into the system, for example. In this way the service is provided to users who consent to the recording. Additionally, in this way non-users will become aware of the system and are more likely to start using the system themselves.

In an embodiment, the saved information and/or the output of the analysis does not identify who said what, but rather, the system indicates that certain keywords were used by someone in certain area. In this way privacy of the users is protected.

In an embodiment, the system records only the user's voice (the user referring to the user of the audio recording device). If the user records only his own voice, there is no need for consent to record from other users and thereby any concerns with regard to privacy may be avoided. For example one of the following techniques may be used to record only user's own voice (or to exclude sounds other than the speaker from being recorded): throat microphone, noise canceling microphone, recording only the speaker's voice's frequency. In another embodiment, only audio portions produced by the user are used for identifying trends even if all available audio were recorded. So the contextual metadata is still there, but the voice/audio data that is used in the process would only be one-party. In other words the identification of trends is based on the speech of the recording user, and any other data comprised in the recorded data is dispensed with. The other data that is dispensed with may comprise also background noise, such as background music. The separation between words spoken by different people may be made for example on the basis of differences in voice frequencies and/or by suppressing background noise. Also this serves the purpose of protecting privacy of other users.

In an embodiment, the system allows the user of the audio recording device to decide whether the final results of the trend identification analysis are shared to other people or not.

Fig. 1 shows an architectural overview of a system 100 of an example embodiment of the invention. The system 100 comprises user devices 101, 102 and 108, a server 105 and a display device 106. The user device 101, 102 or 108 is for example a mobile phone, smart phone, tablet, or some other portable or handheld user device. The server 105 is connected to the user devices 101, 102 and 108 and the display device 106 through one or more communication networks (not shown). The communication networks may be formed of a plurality of interconnected networks or other communication systems including for example one or more of wireless local area network, wired networks, cellular and satellite communication networks. The display 106 is an environmental display that is set to display information to people in certain physical space. The space may be a public or private space and the display may be for example a large screen on a wall.

A skilled person understands that for the sake of clarity only three user devices and one instance of the server 105 and the display device 106 are shown in Fig 1 and that in practice there may exist plurality of these. Further it is to be noted that the display device 106 is not mandatory for operation of the invention. Still further it is to be noted that in some alternative implementations the functionality of the server 105 may be implemented in the user devices 101 and 102.

Fig 1 shows an example where user device 101 collects data 11. The data that is collected comprises recorded conversational data, that is, the user device 101 is set to perform audio recording. The data that is collected comprises also contextual data associated with the audio recording. In an embodiment the conversational data concerns conversations between users of the user devices 101 and 108. The collection of data may be controlled e.g. by a trend analysis application installed in the user device 101. The trend analysis application may perform also preprocessing 12 of the collected data. The preprocessing may comprise for example cursory text/keyword analysis (e.g. light analysis for quick feedback), analysis of background noise and/or flagging "interesting" moments (e.g. moments when certain change is detected in the contextual data - increased heart rate, change in lightning conditions (e.g. movement from light to dark environments), sudden movements, change in background noise, etc). Additionally or alternatively the preprocessing may comprise taking out offensive words before they are sent to server (e.g. removing swear words and such) Collected data set 13 is then sent 13 to the server 105 for further processing 15. The collected data set that is sent to the server 105 may comprise only preprocessed data, only unprocessed data, or both preprocessed and unprocessed data. In a similar manner, the user device 102 collects data 11, preprocesses the collected data 12 and sends 14 collected data set 2 to the server 105.

The server processes 15 data obtained from different user devices. The server may process the data sets obtained from different user devices separately or together in an aggregated collection of data. The processing by the server may comprise combining multiple streams into one stream. This suits for example situations, wherein there are two (or more) users in a conversation with each other and each user is only recording their own speech. The server may put these two or more conversational data sets together to form a fuller data set. Additionally or alternatively, the processing by the server may comprise aggregated keyword analysis. This refers for example to performing keyword analysis to multiple conversational data sets together. Combining multiple sources of data allows the server to figure out which keywords are most popular. Additionally or alternatively, the processing by the server may comprise aggregated context data analysis. This refers for example to performing contextual analysis for multiple sets of contextual data and their associated conversational data sets together. As an illustrative example, combing multiple contextual data sets that indicate high heart rate may allow the system to show things like, "What are people excited about." by identifying discussion topics associated with high heart rate in multiple data sets. Additionally or alternatively, the server may execute text processing algorithms, too. For example, the server may process all text obtained from the conversational data using an algorithm called Latent Semantic Indexing. That algorithm can learn that "house," "apartment," and "home" can all mean the same thing. So instead of those words being three different keywords, they may be combined into one idea. So the identified topic can be "home" while the actual phrase that was recorded was "going back to the house" or "going back to my apartment."

In an embodiment the server 105 sends the results of the analysis back to the respective user device that sent the collected data. That is, result set 1 derived form collected data set 1 is sent to user device 101 and result set 2 derived form collected data set 2 is sent to user device 102. In another embodiment, the result set 1 is additionally sent to the user device 108 as the user of the user device participated in the associated conversations. In yet another embodiment, the server 105 sends the result sets 1 and 2 to the display 106 to be displayed to people in certain space. It is to be noted that these embodiments can be freely combined so that the results are sent both to the display 106 and to the user devices 101 and 102, or both to the display 106 and to the user devices 101, 102, and 108. It is to be noted that even though Fig 1 depicts result sets 1 and 2 as separate result sets, it is possible that there is only one result set derived from collected data sets 1 and 2 together.

In an embodiment the display 106 shows 20 a visualization of the trend analysis results (e.g. result sets 1 and 2). The visualization may be shown in a public space so many can see and experience the data. In an example a large screen is configured to show the results of trend analysis relating to conversations taking place in an office building. Such screen can be placed in the break area of a company so that people can see what's trending in the company. The display may be set to visualize the data based on location, time of the day, day of the week, some other piece of contextual data, or some combination of these.

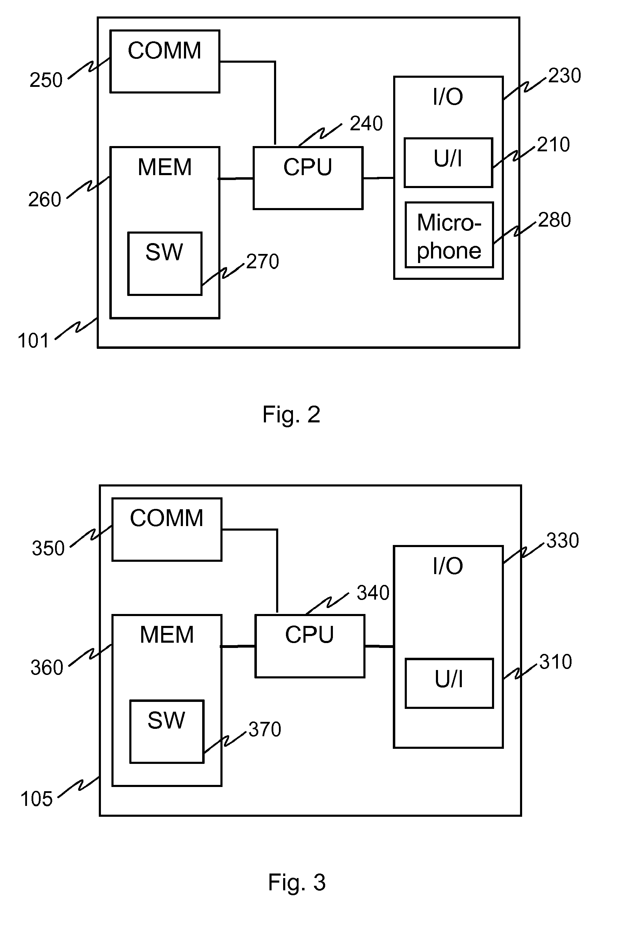

Fig. 2 shows a block diagram of an apparatus according to an example embodiment of the invention. The apparatus can be for example the user device 101 of Fig 1 or some other electronic device. The apparatus 101 comprises a communication interface 250, a processor 240 coupled to the communication interface 250, and a memory 260 coupled to the processor 240. The apparatus further comprises an input/output (I/O) interface 230, which is coupled to the processor 240. In an example embodiment the input/output (I/O) interface 230 comprises a user interface (U/I) unit 210, such as a touch sensitive display, and a microphone 280.

The memory 260 comprises a work memory and a non-volatile memory such as a read-only memory, flash memory, optical or magnetic memory. In the memory 260, typically at least initially in the non-volatile memory, there is stored software 270 operable to be loaded into and executed by the processor 240. The software 270 may comprise one or more software modules and can be in the form of a computer program product that is software stored in a memory medium. In the context of this document, a "memory medium" may be any non-transitory media or means that can contain, store, communicate, propagate or transport the instructions for use by or in connection with an instruction execution system, apparatus, or device, such as a computer. The software 270 is configured to implement one or more feature of embodiments of the invention. The software 270 may implement for example the trend analysis application mentioned in connection with Fig. 1.

The microphone 280 is configured for use in audio recording e.g. under control of the trend analysis application.

The communication interface 250 is configured for communication connections over one or more wired and/or wireless links. The communication interface 250 may implement telecommunication links suited for establishing links with other users or for data transfer, e.g. using the Internet. Such telecommunication links may be links using any of: wireless local area network links, Bluetooth, ultra-wideband, cellular or satellite communication links. The communication interface 250 may be integrated into the apparatus 101 or into an adapter or card that may be inserted into a suitable slot or port of the apparatus 101. While Fig. 2 shows one communication interface 250, the apparatus may comprise a plurality of communication interfaces 250. In a further example embodiment, the apparatus 101 further comprises a near field communication (NFC) unit.

The processor 240 is, for instance, a central processing unit (CPU), a microprocessor, a digital signal processor (DSP), a graphics processing unit, an application specific integrated circuit (ASIC), a field programmable gate array, a microcontroller or a combination of such elements. Figure 2 shows one processor 240, but the apparatus 101 may comprise a plurality of processors.

As mentioned in the foregoing, the memory 260 may comprise volatile and a non-volatile memory, such as a read-only memory (ROM), a programmable read-only memory (PROM), erasable programmable read-only memory (EPROM), a random-access memory (RAM), a flash memory, a data disk, an optical storage, a magnetic storage or a smart card. In some example embodiments, only volatile or non-volatile memory is present in the apparatus 101. Moreover, in some example embodiments, the apparatus comprises a plurality of memories. In some example embodiments, various elements are integrated. For instance, the memory 260 can be constructed as a part of the apparatus 101 or inserted for example into a slot or a port. Further still, the memory 260 may serve the sole purpose of storing data, or it may be constructed as a part of an apparatus serving other purposes, such as processing data. Similar options are available also for various other elements.

A skilled person appreciates that in addition to the elements shown in Fig. 2, the apparatus 101 may comprise other elements, such as displays, as well as additional circuitry such as a camera unit, further input/output (I/O) circuitries, memory chips, application-specific integrated circuits (ASIC), processing circuitry for specific purposes such as source coding/decoding circuitry, channel coding/decoding circuitry and ciphering/deciphering circuitry. Additionally, the apparatus 101 may comprise a disposable or rechargeable battery (not shown) for powering the apparatus if external power supply is not available.

Fig. 3 shows a block diagram of an apparatus according to an example embodiment of the invention. The apparatus can be for example the server 105 of Fig 1 or some other electronic device. The apparatus 105 comprises a communication interface 350, a processor 340 coupled to the communication interface 350, and a memory 360 coupled to the processor 340. The apparatus further comprises an input/output (I/O) interface 330, which is coupled to the processor 340. In an embodiment the input/output (I/O) interface 330 comprises a user interface (U/I) unit 310, such as an interface for a keyboard and a display.

The memory 360 comprises a work memory and a non-volatile memory such as a read-only memory, flash memory, optical or magnetic memory. In the memory 360, typically at least initially in the non-volatile memory, there is stored software 370 operable to be loaded into and executed by the processor 340. The software 370 may comprise one or more software modules and can be in the form of a computer program product that is software stored in a memory medium. In the context of this document, a "memory medium" may be any non-transitory media or means that can contain, store, communicate, propagate or transport the instructions for use by or in connection with an instruction execution system, apparatus, or device, such as a computer. The software 370 is configured to implement one or more feature of embodiments of the invention. The software 370 may implement for example the processing of the collected data for identification of trends mentioned in connection with Fig. 1.

The communication interface 350 is configured for communication connections over one or more wired and/or wireless links. The communication interface 350 may implement telecommunication links suited for establishing links with other users or for data transfer, e.g. using the Internet. Such telecommunication links may be links using any of: wireless local area network links, Bluetooth, ultra-wideband, cellular or satellite communication links. The communication interface 350 may be integrated into the apparatus 105 or into an adapter or card that may be inserted into a suitable slot or port of the apparatus 105. While Fig. 3 shows one communication interface 350, the apparatus may comprise a plurality of communication interfaces 350. In a further example embodiment, the apparatus 105 further comprises a near field communication (NFC) unit.

The processor 340 is, for instance, a central processing unit (CPU), a microprocessor, a digital signal processor (DSP), a graphics processing unit, an application specific integrated circuit (ASIC), a field programmable gate array, a microcontroller or a combination of such elements. Figure 3 shows one processor 340, but the apparatus 105 may comprise a plurality of processors.

As mentioned in the foregoing, the memory 360 may comprise volatile and a non-volatile memory, such as a read-only memory (ROM), a programmable read-only memory (PROM), erasable programmable read-only memory (EPROM), a random-access memory (RAM), a flash memory, a data disk, an optical storage, a magnetic storage or a smart card. In some example embodiments, only volatile or non-volatile memory is present in the apparatus 105. Moreover, in some example embodiments, the apparatus comprises a plurality of memories. In some example embodiments, various elements are integrated. For instance, the memory 360 can be constructed as a part of the apparatus 105 or inserted for example into a slot or a port. Further still, the memory 360 may serve the sole purpose of storing data, or it may be constructed as a part of an apparatus serving other purposes, such as processing data. Similar options are available also for various other elements.

A skilled person appreciates that in addition to the elements shown in Fig. 3, the apparatus 105 may comprise other elements, such as microphones, displays, as well as additional circuitry such as a camera unit, further input/output (I/O) circuitries, memory chips, application-specific integrated circuits (ASIC), processing circuitry for specific purposes such as source coding/decoding circuitry, channel coding/decoding circuitry and ciphering/deciphering circuitry. Additionally, the apparatus 105 may comprise a disposable or rechargeable battery (not shown) for powering the apparatus if external power supply is not available.

It shall be understood that any coupling in this document refers to functional or operational coupling; there may be intervening components or circuitries in between coupled elements unless expressly otherwise described.

It is also useful to realize that the term apparatus is used in this document with varying scope. In some of the broader claims and examples, the apparatus may refer to only a subset of the features presented in Fig. 2 or Fig. 3 or even be implemented without any one of the features of Fig. 2 or Fig 3. In an example embodiment term apparatus refers to the processor 240 or 340.

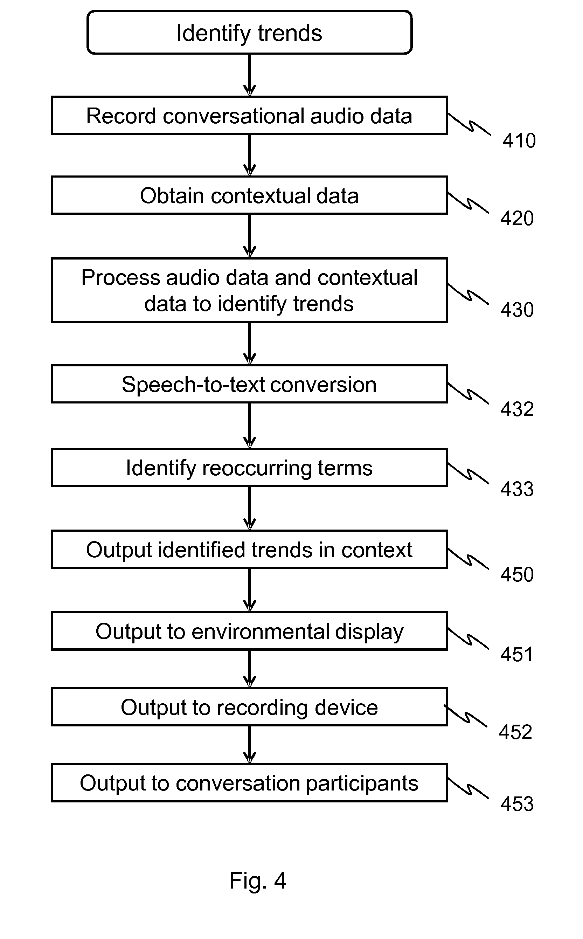

Fig. 4 shows a flow diagram illustrating a method according to an example embodiment of the invention. The method is performed for example in the user device 101 or 102 and server 105 of Figs 1-3. It is to be noted that all phases illustrated in Fig 4 are not necessarily performed in a certain implementation. Likewise, the order of the phases may vary from the order shown in Fig 4.
410: Conversational audio data is recorded. For example, user A sets her mobile phone to record conversation between the user A and a user B.
420: Contextual data is obtained. For example, the mobile phone of the user A (e.g. a trend analysis application therein) notes down date and time and GPS coordinates during the conversation (in the beginning of the conversation, in the end of the conversation or in the middle of the conversation). The date and time form part of the contextual data. The mobile phone of the user A may be configured to sense other nearby devices e.g. using a Bluetooth connection and to note down identity of such devices as the contextual data. Contextual data may be obtained from other devices or systems if desired information is not readily available in the audio recording device. For example, contextual data may be obtained from wearable devices interacting with the audio recording device. Contextual data obtained from a wearable device may comprise for example results of physiological measurements. For example heart rate of the user A may be obtained and noted down to be included in the contextual data.
430: The recorded audio data and the obtained contextual information are processed to identify trends in context. The processing may be performed in the audio recording device, e.g. the mobile phone of the user A, or in a server, or partially in the audio recording device and partially in the server.
432: As part of the processing, speech-to-text conversion is performed to the recorded conversational audio data. In this way, the recorded conversational audio data is rendered more tractable for keyword analysis.
433: As part of the processing, reoccurring terms are identified in the recorded conversational audio data. In an embodiment the terms are identified based on the recorded audio. In alternative embodiment the terms are identified based on the text obtained from the speech-to-text conversion 432.
450: The identified trends are then output in context. That is, the system outputs trends tied to certain location, date, time, person, any other contextual data, or a combination of two or more of these.
451: The output is shown on an environmental display.
452: The output is provided to the audio recording device, e.g. to the mobile phone of the user A.
453: The output is shared with participants of the conversation. For example, the output is provided to the user B (e.g. to a mobile phone or some other user device of the user B).

In the following a possible use case is discussed: In an office building, conversation data is recorded and analyzed. After the conversation data are processed and analyzed the identified trends are shared with the office people. People in the building can see that the legal department has been talking about "election," "politics," and "Disneyland." Meanwhile, the southwest corner of the 4th floor has been talking about "Marvel," "7 minute workout," and "wearables." In an example scenario, users' conversations in contextual framework (keywords and location) are presented on a map on a display for everyone to see. In this way, occupants of the building can get a sense of what's going on in the building. Engineers can take a glance to see what other engineering groups are talking about. What's the buzz people are talking about? It would build morale when employees see that other groups are also talking about the current project. In this way, organizations can identify conversation trends in the company.

Without in any way limiting the scope, interpretation, or application of the claims appearing below, a technical effect of one or more of the example embodiments disclosed herein is improved automatic identification of trends, emerging interests and/or important matters. Another technical effect of one or more of the example embodiments disclosed herein is that analysis techniques of written content can be applied to an off-line, in-person, population.

Various embodiments of the invention for example provide an automated solution that helps rapid contextual overview of trending topics. Providing such overview is not possible without use of computerized system, that is, it is not feasible to try to perform such analysis by pen and paper only. Another technical effect of one or more of the example embodiments disclosed herein is provision of fine grained trending information on the basis of contextual information that is used. Trending topics in different physical locations may vary significantly and this can be taken into account by using embodiments of the invention. Another technical effect of one or more of the example embodiments disclosed herein is improved user experience. With the use of various embodiments users may become more aware of the trending topics e.g. in surrounding environment and may be able to make informed decisions concerning the actions.

Embodiments of the present invention may be implemented in software, hardware, application logic or a combination of software, hardware and application logic. The software, application logic and/or hardware may reside on the user device or apparatus 101. In an example embodiment, the application logic, software or an instruction set is maintained on any one of various conventional computer-readable media. In the context of this document, a "computer-readable medium" may be any non-transitory media or means that can contain, store, communicate, propagate or transport the instructions for use by or in connection with an instruction execution system, apparatus, or device, such as a computer, with examples of a computer described and depicted in Figs. 2 and 3. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications which may be made without departing from the scope of the present invention as defined in the appended claims.

## Claims

1. A method, comprising performing identification of trends by:
obtaining recorded conversational audio data;
obtaining contextual information associated with the recorded conversational audio data;
processing the recorded conversational audio data and the obtained contextual information to identify trends in context; and
outputting said identified trends in context.

2. A method according to claim 1, wherein the processing comprises identifying at least one reoccurring term in the recorded conversational audio data, the reoccurring term constituting an identified trend.

3. A method according to claim 1 or 2, wherein the processing comprises converting the recorded conversational audio data to text.

4. A method according to any preceding claim, wherein the recorded conversational audio data comprises speech of a recording user who has performed the recording of the conversational audio data; and wherein the processing comprises performing the identification of trends based on the speech of the recording user, and dispensing with other data comprised in the obtained recorded conversational audio data.

5. A method according to any preceding claim, wherein said contextual information comprises at least one of: location, date, time, identity of associated people, physiological measures relating to associated people, information about background noise.

6. A method according to any preceding claim, comprising outputting said identified trends in context to one or more participants of the conversational audio data.

7. A method according to any preceding claim, comprising outputting said identified trends in context to an environmental display.

8. A method according to any preceding claim, wherein outputting said identified trends in context comprises outputting identified trends tied to certain physical location.

9. A method according to any preceding claim, wherein outputting said identified trends in context comprises outputting identified trends tied to certain physiological condition.

10. A method according to any preceding claim, further comprising obtaining recorded conversational audio data and associated contextual information from multiple user devices, and processing the obtained recorded conversational audio data and associated contextual information together to identify the trends in context.

11. An apparatus, comprising:
an interface configured to receive input; and
a processor configured,
to obtain recorded conversational audio data;
to obtain contextual information associated with the recorded conversational audio data;
to process the recorded conversational audio data and the obtained contextual information to identify trends in context; and
to output said identified trends in context.

12. An apparatus according to claim 11, wherein the interface comprises a microphone configured to record the conversational audio data.

13. An apparatus according to claim 11 or 12, wherein the interface is a communication interface and the processor is configured to receive recorded conversational audio data and the contextual information through the communication interface.

14. An apparatus according to claim 11, 12 or 13, wherein the processor is further configured to perform a method of any one of claims 2-10.

15. A computer program, comprising code for performing the method of any one of claims 1-10 when the computer program is executed.
